Europäisches Patentamt

European Patent Office

Office européen des brevets

(11) Publication number: **0 090 757**
A2

# EUROPEAN PATENT APPLICATION

(21) Application number: 83630035.0

(22) Date of filing: 04.03.83

(51) Int. Cl.³: **G 05 B 23/02**, G 06 F 11/26

(30) Priority: 29.03.82 US 362781

(43) Date of publication of application: 05.10.83
Bulletin 83/40

(84) Designated Contracting States: **DE FR GB**

(71) Applicant: **CARRIER CORPORATION, Carrier Tower P.O.
Box 4800, Syracuse New York 13221 (US)**

(72) Inventor: **Briccetti, Mario F., 8394A Shallow Creek,
Liverpool New York 13088 (US)**
Inventor: **Reedy, Wayne R., East Lake Road, Cazenovia
New York 13035 (US)**

(74) Representative: **Waxweiler, Jean et al, OFFICE
DENNEMEYER S.à.r.l. 21-25 Allée Scheffer P.O.Box 41,
Luxembourg (LU)**

(54) Field service test for an electronic control.

(57) A field service test for an electronic control and apparatus for accomplishing that test are disclosed. The electronic control includes a microprocessor incorporating test logic therein. A passive test device is provided for connecting the outputs and inputs of the microprocessor control such that upon an initiating test signal being provided the internal test logic within the control generates a series of outputs which are circuited to the inputs of the microprocessor where they are compared to known values to determine whether or not the microprocessor is performing appropriately. Means are provided for generating an alarm signal upon an error being detected in the microprocessor operation.

-1-

## FIELD SERVICE TEST FOR AN
## ELECTRONIC CONTROL

Background of the Invention
Field of the Invention
The present invention relates to an air conditioning system including a microprocessor control. More specifically, the present invention concerns a method of self-testing a microprocessor control in a field location. Apparatus and a method are provided for connecting the microprocessor inputs and outputs and effecting a self-evaluation of the functions of the microprocessor.

Description of the Prior Art
Air conditioning systems including straight cooling systems and heat pumps, furnaces, humidifying, dehumidifying and ventilating systems and other such air conditioning or treatment systems may include a microprocessor control for appropriately operating said systems. Typically, a thermostat located in the space to be conditioned supplies a thermostat signal to the microprocessor control. The microprocessor control conditions the thermostat signal and generates a resultant signal which acts to appropriately energize components of the air conditioning unit to operate the unit in the desired modes.

In order to effectively evaluate the operation of the microprocessor with such a system a series of tests of the microprocessor may be arranged. As set forth herein, the microprocessor includes internal self-test logic including a self-test program for evaluating the microprocessor prior to being installed as a portion of the control, internal self-test logic for evaluating the air conditioning unit prior to being shipped from the factory and internal self-test logic for accomplishing the field test as set forth herein.

In order to evaluate the microprocessor unit control heretofore a separate microprocessor based test system has been utilized. This separate system was typically connected to the inputs and outputs of the microprocessor control and included a computer for generating a series of outputs to simulate thermostat outputs. The test computer would then monitor the resultant signal generated by the unit microprocessor in response to the inputs generated by the tester. This tester would then compare through its logic the resultant signal generated by the unit microprocessor with a known acceptable signal selected as a function of the input signal to determine whether or not the microprocessor is functioning appropriately.

The present testing scheme provides for the test logic to be incorporated within the microprocessor. The microprocessor will internally generate the appropriate output test signal which is conditioned by the microprocessor to generate a resultant signal. A passive circuit connects the microprocessor outputs to the microprocessor inputs. The microprocessor then compares the signal received at the inputs to a known table of permissible inputs based upon the output test signal to determine whether or not the microprocessor is performing properly. Hence, the logic for performing the test function is now incorporated within the microprocessor of the unit rather than in a separate tester.

By providing only a passive circuit for connecting the microprocessor input to the output during field tests the cost of such a test device is greatly diminished. A passive circuit as used herein is a circuit incorporating only resistors, diodes and a transistor between the output connections and the input connections. The purpose of the resistors, diodes and transistor is to condition the output signal such that a twenty-four volt AC output signal may be directed to an input designed to receive a five volt DC signal. Since this test device incorporates such a simple circuit it may be mass produced inexpensively. By making this tester affordable it may be widely available to servicemen for utilization as a field service tester of the microprocessor of an air conditioning unit.

With a field service test device incorporating a separately programmed computer within the tester for simulating the thermostat, the cost of each unit is considerable and may be beyond the reach of the typical maintenance operation. The present tester is sufficiently inexpensive that the typical maintenance operation could afford to have a tester with each maintenance vehicle. Widespread acceptance and availability of such a tester would reduce overall service time and help make the repairman more efficient.

In addition, the present test device may be sufficiently economical that it may be incorporated as a portion of the control itself such that a simple switch means on the board may be utilized to effect the testing. In addition to the test circuit a start button and signal light may be connected through a test plug to a test connector which is connected to the microprocessor. It is through this test connector that a start signal for the field service test operation is determined and it is through the signal light that a go or no go signal may be detected for indicating appropriate or inappropriate operation of the microprocessor control.

0090757

-4-

## Summary of the Invention

It is an object of the present invention to provide a control for use with an air conditioning system.

A more specific object of the present invention is to provide a method of field testing a microprocessor control of an air conditioning system.

A further object of the present invention is to provide a simple means of connecting a test device to a microprocessor for accomplishing a test function.

It is another object of the present invention to provide a microprocessor control incorporating test logic therein which may be initiated to effect a field service test of the microprocessor control.

Another object of the present invention is to provide a safe, economical, reliable and inexpensive apparatus and a method for accomplishing a field test of a microprocessor control incorporated within an air conditioning unit.

These and other objects of the present invention are achieved according to a preferred embodiment thereof by providing an apparatus for testing a microprocessor control of an air conditioning unit including a microprocessor having inputs and outputs. An output connector is connected to the outputs of the microprocessor and an input connector is connected to at least some of the inputs of the microprocessor. A circuit means for conducting signals from the output connector to the input connector is connected therebetween. Means for generating an output signal, conditioning means for generating a resultant signal in response to the output signal and connecting the resultant signal to the output connector and comparator means for indicating that the signal received

-5-

from the input connector is an appropriate signal based on the selected output signal and means for generating an alarm signal if an incorrect pattern is received are all provided. Additionally, a test connection to the microprocessor may be incorporated such that when the test plug is inserted within the test connector and an initializing signal is detected for commencing operation of the self-test function. A light means is additionally provided for indicating an alarm or failure situation.

Brief Description of the Drawings

Figure 1 is a schematic representation of a split heat pump system incorporated into a residential building.

Figure 2 is a schematic wiring diagram of the controls of the heat pump system.

Figure 3 is a flow diagram of the summary of the operation of the microprocessor control for the heat pump system.

Figure 4 is a flow chart of the self-test operation of the microprocessor control.

Figure 5 is a block diagram representation of the connection of the tester to the microprocessor control for effecting a field service test.

Description of the Preferred Embodiment

The apparatus as described herein will refer to a heat pump system for use in a residential building incorporating a microprocessor control. It is to be understood that although the present apparatus and method of operation is directed to this system the test routine and test devices as provided be equally applicable to other types of air conditioning systems including furnaces and other systems not including refrigeration circuits. It is to be further understood that although the present invention describes a specific apparatus for accomplishing the self-test function that other apparatus may be utilized and this apparatus may be incorporated as a portion of the control as well as a separate test device.

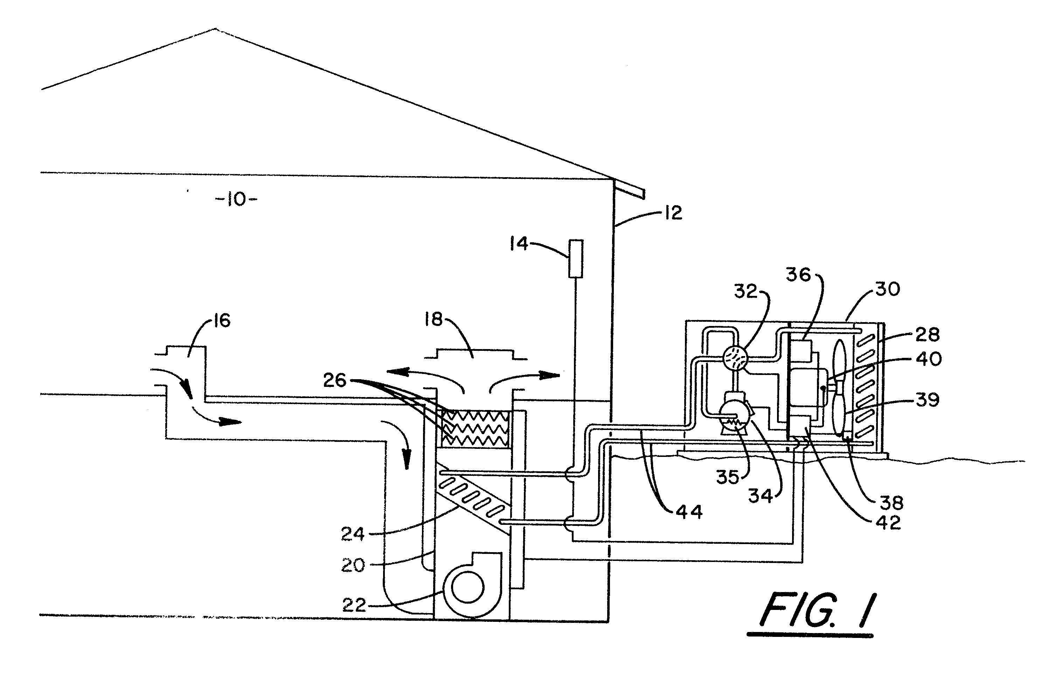

Referring first to Figure 1 there can be seen a schematic representation of a heat pump system. Residence 10 is shown having fan coil unit 20 located therein for circulating conditioned air within the house. Supply air duct 16 is shown directing air from the enclosure to fan coil unit 20 and return air duct 18 is shown for directing air from the fan coil unit back to the enclosure. Within the fan coil unit 20 may be seen indoor fan 22, indoor heat exchanger 24 and strip heaters 26. Indoor fan 22 acts to circulate the air through the supply duct, through the indoor heat exchanger and strip heaters and back through the return air duct to the enclosure. Indoor heat exchanger 24 is part of a refrigeration circuit and acts to either discharge heat to the air stream directed thereover via indoor fan 22 or to absorb heat energy therefrom. Strip heaters 26 are located downstream from indoor heat exchanger 24 and may be selectively energized to supply heat energy to the air stream flowing through the fan coil unit.

Outdoor unit 30 is shown located exterior of residence 10 and is typically mounted on a pad located adjacent thereto. Within outdoor unit 30 may be seen outdoor coil 28 of the refrigeration circuit, compressor 34 and reversing valve 32. Additionally, there can be seen outdoor fan 39 connected to outdoor fan motor 40 for circulating ambient air over outdoor coil 28. Outdoor temperature sensor 36, outdoor coil temperature senser 38, crankcase heater 35 and control 42 are also indicated to be within the outdoor unit. Likewise, thermostat 14 as well as electrical connections to strip heaters and the indoor fan motor for powering indoor fan 22 are designated.

The refrigeration circuit is made up of indoor coil 24, outdoor coil 28, compressor 34, reversing valve 32 and interconnecting piping 44. Expansion devices for accomplishing pressure drops between the refrigeration circuit are not shown.

During operation of this unit in the heating season, heat energy is absorbed in the outdoor coil 28 acting as an evaporator and discharged to indoor air via indoor heat exchanger 24 serving as a condenser. In the cooling mode of operation the reversing valve is switched such that hot gaseous refrigerant from the compressor is directed first to the outdoor coil 28 then serving as a condenser and then directed to the indoor coil 24 serving as an evaporator for absorbing heat energy from the indoor air.

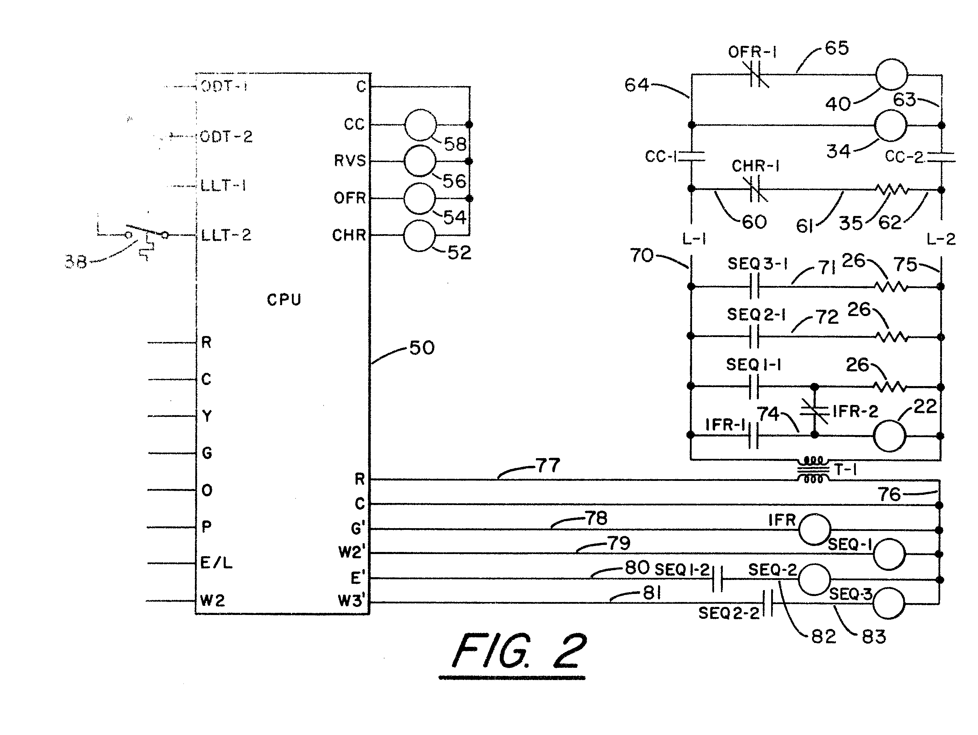

Referring now to Figure 2, there can be seen a schematic representation of the control system of this unit. In the left hand portion of Figure 2 is shown, greatly enlarged, a central processing unit 50. Typically, this would be a commercially available microprocessor such as a Mostek 3870. It can be seen that the microprocessor has a plurality of inputs and outputs. Starting from the top left it can be seen that outdoor air temperature sensor 36 is connected through ODT-1 and ODT-2 to the central processing unit. Additionally, outdoor coil temperature sensor 38 is shown connected to the CPU through LLT-1 and LLT-2. Thereafter, a series of eight thermostat inputs labeled R, C, Y, G, O, P, E/L and W-2 are shown entering the central processor unit. In sequential order, these thermostat inputs are as follows: R - Power to the thermostat from the CPU; C - Common; Y - First stage heating; G - Energize indoor fan relay; O - First stage cooling (reversing valve); P - Power to the central processing unit from the thermostat; E/L - Emergency heat or fault light; W-2 - Second stage heat.

-8-

On the right hand side of the central processing unit there may be seen connections to various relays. Crankcase heater relay 52, outdoor fan relay 54, reversing valve solenoid relay 56 and compressor contactor 58 are all shown connected to the appropriate compressor, reversing valve solenoid, outdoor fan relay, and crankcase heater relay connections of CPU 50. The CPU is programmed such that upon an appropriate set of inputs being sensed these relays will be energized.

At the bottom right hand side of the central processing unit 50 there are shown six connection points labeled respectively R, C, G', W-2', E' and W-3'. In order, these connections are R - Power, C - Common, G' - Indoor fan relay, W-2' - First stage heat, E' - Second stage heat and W-3' - Third stage heat. As can be seen in Figure 2, the R connection is connected via wire 77 to one side of transformer T-1. The C connection is connected via wire 76 to the other side of transformer T-1. G' is connected via wire 78 to indoor fan relay IFR. Wire 79 connects W-2' to sequence relay SEQ-1. The E' terminal is connected via wire 80 to first sequence relay contacts SEQ1-2 which are connected by wire 82 to second sequence relay SEQ-2. Contact W-3' is connected via wire 81 to second sequence relay contacts SEQ2-2 which are connected by wire 83 to third sequence relay SEQ-3.

As shown in Figure 2, lines L-1 and L-2 supply power to the fan coil unit and CPU. Line L-1, designated wire 70, is connected to normally open first sequence relay contacts SEQ1-1, normally open second sequence relay contacts SEQ2-1, to normally open third sequence relay contacts SEQ3-1, to normally open indoor fan relay contacts IFR-1 and to transformer T-1. Line L-2, designated as 75, is connected to heaters H1, H2 and H3, all designated as 26, to transformer T-1 and to indoor fan motor 22. Wire 71 connects normally open third sequence relay contacts SEQ3-1 to heater H3.

Wire 72 connects normally open second sequence relay contacts SEQ2-1 to heater H2. Wire 73 connects normally open first sequence relay contacts SEQ1-1 to heater H1 and to normally closed indoor fan relay contacts IFR-2. Wire 74 connects normally open indoor fan relay contacts IFR-1 and normally closed indoor fan relay contacts IFR-2 to indoor fan motor 22.

Power wiring of the outdoor unit may be seen in the top portion of Figure 2. Therein connected between power lines L-1 and L-2 is wire 60 connected to normally open compressor contacts CC-1 and to normally closed crankcase heater relay contacts CHR-1. Wire 61 connects normally closed crankcase heater relay contacts CHR-1 with crankcase heater CCH (35). Crankcase heater 35 is connected via wire 62 to line L-2 and to normally open compressor contactor contacts CC-2. Wire 64 connects normally open compressor contactor contacts CC-1 to normally closed outdoor fan relay contacts OFR-1 and to compressor motor 34. Wire 65 connects normally closed outdoor fan relay contacts OFR-1 to outdoor fan motor 40. Normally open compressor contactor contacts CC-2 are connected via wire 63 to compressor motor 34 and to outdoor fan motor 40.

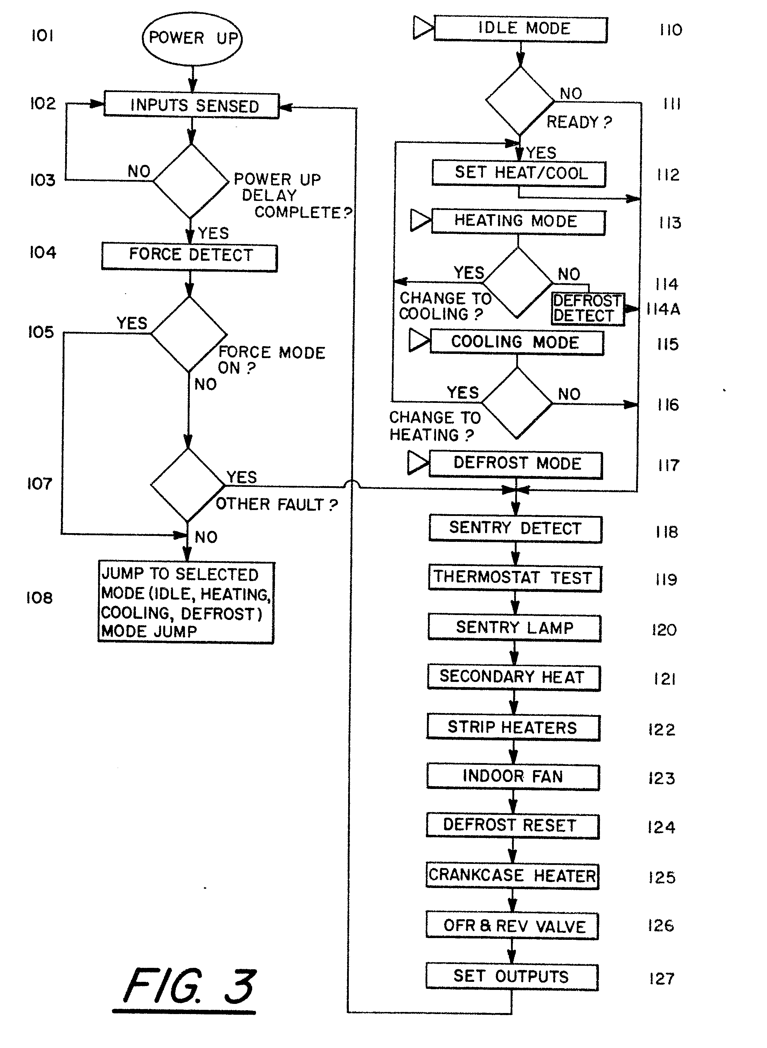

Figure 3 is a flow chart indicating the overall operation of the control system. It can be seen that the overall system control is obtained by logic flow through a series of logic steps. Each logic step may represent a subroutine or series of steps omitted for clarity in this overall chart. The initial step 101 is the powerup of the unit upon energization. Thereafter at step 102 the various inputs are sensed. To make sure the inputs are stabilized and debounced a powerup delay occurs before proceeding to force detect step 104. If the powerup delay is not complete then there is a reversion to the step of sensing inputs until said delay is accomplished.

Force detect, step 104, determines whether or not the compressor is operating when it is not supposed to be. This step would detect a condition such as a contactor welded shut energizing the compressor when the various inputs are calling for the compressor to be de-energized. Step 105 determines whether the force mode is detected. If the force mode is detected then the program skips to step 108 wherein the logic jumps to the selected mode. If, in step 105, the force mode is not detected then the logic proceeds to step 107. At step 107 there is a determination whether there is another fault in the system. If there is no other fault the logic proceeds to step 108, the jump to the selected mode, one of the modes of idle, heating, cooling or defrost. If another fault is detected then the control logic jumps to step 118, sentry detect.

If in step 108 the jump is selected to the idle mode then the logic proceeds to step 110. Thereafter, at step 111, a ready determination is made and if the answer is no the logic jumps to step 118 without placing the unit in heating or cooling. If the answer to step 111 is yes the logic proceeds to step 112 and the air conditioning unit is placed in heating or cooling in step 112. The logic then jumps to step 118.

If the jump to the selected mode selects the heating mode then the jump is made to step 113. Once operation is in the heating mode the question of should operation be changed to cooling is continually answered at step 114. If the answer is yes, the logic is cycled back to step 112 of setting the unit in heat or cool and if the answer is no logic operation proceeds to step 114A, defrost detect. If a need for defrost is detected the logic changes the mode from heating to defrost and then jumps to step 118. If a need for defrost is not detected the logic does not change the mode and then jumps to step 118.

If in step 108 the selection is the cooling mode then the logic proceeds to step 115. Step 116 continually questions if operation should be changed to heating. If the answer is yes the control sequence proceeds back to the step 112 of setting the unit for heating or cooling. If the answer is no the logic jumps to step 118.

The fourth mode jump is to the defrost mode, step 117. This step in the logic either continues or cancels the defrost mode of operation. If the jump is made to the defrost mode thereafter the logic proceeds through the entire control sequence. From the defrost mode the control sequence includes the steps of sentry detect 118, thermostat test 119, sentry lamp 120, secondary heat 121, strip heaters 122, indoor fan 123, defrost reset 124, crankcase heater 125, OFR plus REV valve 126 and set outputs 127. From the step of set outputs 127 the control sequence reverts to the inputs sensed step 102.

The sentry detect step acts to check the compressor for low current or for ground fault indication. The thermostat test checks to make sure the inputs from the thermostat are in a legal pattern. The sentry lamp step acts to blink a thermostat lamp to indicate various fault modes. Secondary heat controls the W-2 output from the central process unit. The step of strip heaters 122 control the E' and W-3' outputs from the central processing unit. Indoor fan step 123 controls indoor fan 22. Defrost reset determines when a defrost timer for controlling the length of defrost needs to be reinitialized. Crankcase heater, step 125, acts to control the crankcase heater operation. OFR plus REV valve, step 126, acts to control the outdoor fan relay and the reversing valve relays under the appropriate conditions. Step 127 for setting the outputs turns on and off the central processing unit outputs and detects when the compressor is changing state.

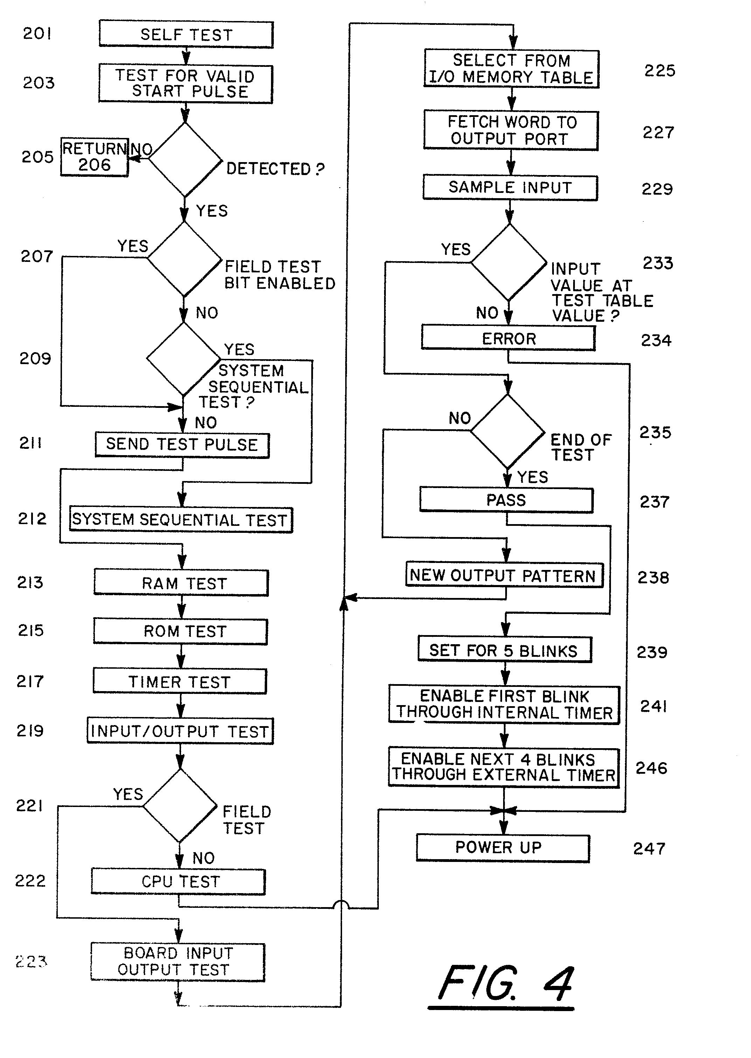

Referring now to Figure 4 there may be seen the appropriate logic for accomplishing the testing function of the microprocessor control. This testing function is accomplished in multiple stages with the emphasis as set forth in the flow logic herein on the field service test stage. The other test operations which the unit may perform are merely indicated as subroutines herein including subroutine 212 for operating the system sequential test and subroutine 222 for operating the central processing unit test. The system sequential test subroutine is the subject matter of a copending patent application entitled "Apparatus And A Method For Sequentially Testing The Operation Of An Air Conditioning Unit", serial no.              . The CPU subroutine 222 refers to an internal subroutine which may be utilized during manufacture to verify if the microprocessor is performing appropriately.

Self-test step 201 commences the self-test logic portion of the microprocessor program. From there the logic proceeds to step 203 to ascertain whether or not there is a valid start pulse. This valid start pulse may be detected by the connection of a test plug to a test connector connected to the microprocessor control. The detection of such plug within the connector acts to generate the appropriate signal. At step 205 the question is asked whether or not a valid start pulse is detected. If no, the logic proceeds to return 206 which is equivalent to step 102 inputs sensed of Figure 3. If the answer is yes the logic proceeds to step 207 where the question of whether or not the field test bit is enabled is asked. If the answer in step 207 is no the logic proceeds to step 209 to ask whether or not a system sequential test is being called for. If the answer is yes the logic flows to step 212 to operate the system sequential test subroutine. If the answer to the question asked in step 209 is no or the answer to whether or not the field test bit is enabled at step 207 is yes the logic proceeds to step 211 to send a test pulse. From step 211 the logic proceeds to operate the unit through a RAM test at step 213, a ROM test at step 215, a timer test at step 217 and an input/output test at step 219. From there the logic proceeds to step 221 to again ask the question of whether or not this is a field test. If the answer is no the logic proceeds to the CPU test subroutine step 222 to evaluate the central processing unit. If the answer to whether or not this is a field test is yes the logic then proceeds to step 223 to do an input/output test.

From the input/output test step the logic proceeds to step 225 where a value is selected from an input/output memory table. At step 227 the output selected is conditioned through the microprocessor to generate an appropriate word at an output port. Through the tester being physically connected between the outputs and inputs of the microprocessor this signal is connected to the input port where at step 229 the input is sampled. At step 233 the question is asked whether or not the input value is equivalent to the test table value. If the answer is no the logic proceeds to step 234, an error signal is indicated and an alarm signal is generated. If the answer to this question is yes the logic then proceeds to step 235 where the question is asked whether or not this is the end of the field test. If the answer to the question is no the logic proceeds to step 238 to generate a new output pattern which is then conducted to step 227 to be conditioned through the microprocessor and directed to the output port. The test table value is a series of responses known to be permissible responses to various output signals detected at the input signal. Step 238 generates a new output pattern and also includes a series of output signals which are generated sequentially to the microprocessor for being conditioned and directed to the output port as a resultant signal.

If the answer to the question asked at step 235 is yes the logic proceeds to step 237 to indicate that the field service test has been passed. If an error was detected the logic would previously have proceeded to subroutine 234 for generating an error signal. From step 237 the logic proceeds to step 239 wherein the logic acts to generate five blinks of a test light to indicate a pass condition. At step 241 the first blink is enabled through an internal timer of the microprocessor. The logic then proceeds to step 246 to enable four additional blinks of the timer to generate the five blink total signal for indicating appropriate operation. The four blinks are enabled via an external timer. The logic then proceeds to step 247, powerup, to commence operation of the unit in its normal mode rather than the test mode.

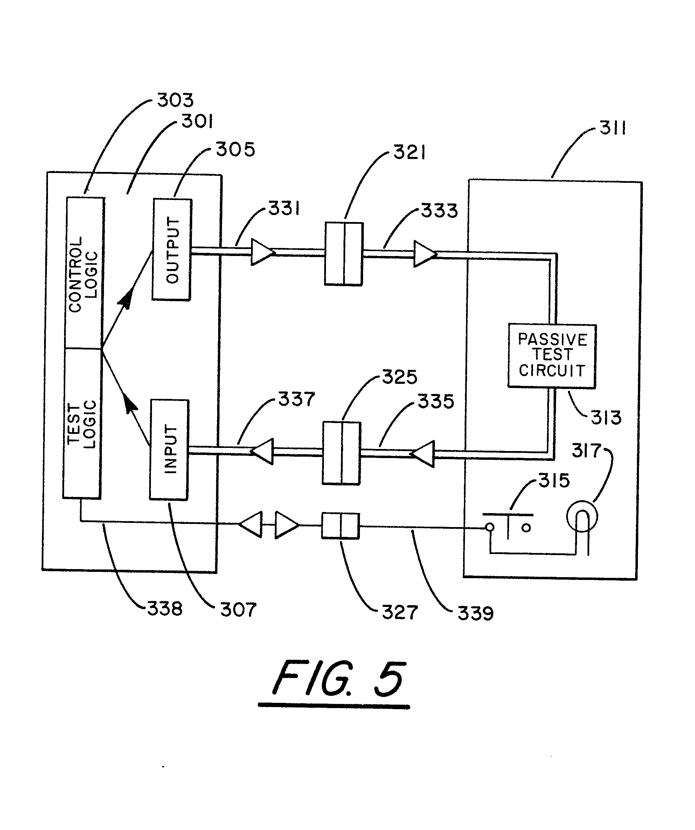

Referring now to Figure 5 there can be seen a block representation of the appropriate test connections. Testor 311 is shown having a start button 315, lamp 317 and passive test circuit 313. Control 301 is shown having central processing unit 303 having both control logic and test logic and having input 307 and output 305. Input 307 and output 305 are both connected to the central processing unit 303.

Output 305 is connected via flow path 331 to output connector 321 which is connected via flow path 333 to passive test circuit 313. Additionally, passive test circuit 313 is connected by flow path 335 to input connector 325 which is connected by flow path 337 to input 307. Also, flow path 339 connects test connector 327 to flow path 338 which is connected to the central processing unit 303. Although shown in block form these connectors are typically male and female connectors, one of which may be inserted into the other, to appropriately connect tester 311 to control 301. As shown in Figure 5, the output 305 and input 301 are typically connected to output connector 321 and input connector 325 such that half of the input or output connector is mounted on a printed circuit board together with the central processing unit. Half of test connector 327 is also mounted to the printed circuit board. The other half of the output connector, input connector and test connector is connected to tester 311 such that when it is desired to conduct a field service test the regular output and input connections to the microprocessor control are removed and the tester connections are inserted as substitutes therefor.

In other words, output connector 321, input connector 325 and test connector 327 are all half of the connector plugs located on a printed circuit board with central processing unit 303 forming a portion of the control 301. During normal operation the input plug may be connected to a series of control wires extending from the thermostat to generate an input signal to the central processing unit. The output connector 321 may be located such that it has an output plug connected thereto for generating the appropriate resultant signals to the indoor fan coil, compressor or other portions of the heat pump system. The test connector is typically just mounted on the printed circuit board and has nothing connected thereto.

When it is desired to accomplish a test function the thermostat connector and the air conditioning unit connector are removed from the input and output connectors and the input, output and test connectors from the tester 311 are connected to the appropriate connectors of the control.

Operation

As can be seen from Figures 4 and 5, to accomplish a field test it is necessary to achieve both physical changes in electrical connections of the unit and to operate through

-16-

the control test logic scheme as set forth in Figure 4. Firstly, the appropriate connections of the thermostat and the air conditioning unit are removed from the central processing unit and the tester connections are substituted therefor. The tester incorporates a passive circuit for connecting outputs 305 to inputs 307. The passive circuit conditions the twenty-four volt AC signals from the output to the appropriate signals for the input such as five volt DC signals. The passive circuit may include diodes for converting AC signals to DC signals and divider circuits with resistors for accomplishing the appropriate voltage drops. The test connector is utilized such that a start signal may be initiated to start the test program and also includes connections to a lamp for indicating alarm or other conditions as tested.

Once a tester is connected, the logic detects a valid start pulse and then commences the test operation. If the field test bit is enabled indicating to the logic that the field test is being called for then the system sequential test subroutine and the central processing unit subroutine, 212 and 222 respectively, are avoided and the unit is operated in the field test mode as set forth in steps 221 through 238. In the field test an appropriate output is selected from an input/output memory table. This output is conditioned through the control logic of the microprocessor and a resultant signal is generated. This resultant signal is conducted from output 305 to input 307 through passive test circuit 313. At step 229 the input is sampled and the input is then compared at step 233 to a test table having known values for appropriate outputs. If the input as sensed is appropriate for the output generated then the test logic is cycled to generate a new output from the memory table. This operation is continuously cycled until all the desired outputs are generated and the microprocessor is fully tested. If an inappropriate test value is detected the unit goes to an error mode and a light may be energized continuously to so indicate. If the memory table is cycled through completely and no error is detected then the test is completed and the logic proceeds to step 237, pass. At the pass step light 317 of the tester is set to blink five times to indicate that the microprocessor is performing appropriately.

A test arrangement has been described herein and refers to a system for accomplishing a microprocessor control self-test without including additional microprocessor or other sophisticated equipment to evaluate the microprocessor incorporated in the air conditioning unit. The initial microprocessor as incorporated in the unit includes its own self-test logic. A very simple passive circuit test device connected between the inputs and outputs of the microprocessor and connected to a test connector for initializing the test logic is described. By utilizing this simple device to reroute output signals to the input signals the cost and complications of an expensive test device for simulating output signals from a thermostat are avoided.

The present invention has been described with reference to a specific embodiment. It is to be understood by those skilled in the art that variations and modifications can be effected within the spirit and scope of the invention.

-18-

CLAIMS

What is claimed is:

1.    Apparatus for testing a microprocessor control including a microprocessor having inputs and outputs which comprises:

an output connector connected to at least some of the outputs of the microprocessor;

an input connector connected to at least some of the inputs of the microprocessor;

circuit means for conducting a signal from the output connector to the input connector;

means internal to the microprocessor for generating an output signal;

conditioning means for generating a resultant signal in response to the output signal and connecting said resultant signal to the output connector; and

comparator means for indicating if the signal received by the input connector is an appropriate signal based on a selected output signal and for generating an alarm signal if an incorrect pattern is received.

2.    The apparatus as set forth in claim 1 wherein the circuit means is a passive circuit for connecting each output to the respective input.

3.    The apparatus as set forth in claim 1 wherein the comparator means and the conditioning means are both portions of the microprocessor.

4.    The apparatus as set forth in claim 1 and further comprising indexing means for cycling a series of output values to the conditioning means and wherein the comparator means comprises a table of input values to which the output values may be compared to detect an error and wherein the microprocessor includes both the comparator means and the means for cycling a series of outputs.

5.  The apparatus as set forth in claim 1 and further comprising:

a test connector connected to the microprocessor and a start means for commencing a test routine; and

a signal light connected to be energized by the alarm signal.

6.  The apparatus as set forth in claim 5 wherein the circuit means, start means and signal light are all incorporated into a single tester including means extending therefrom for connecting to the output connector, input connector and the test connector.

7.  A method of self-testing a microprocessor control including a series of output connections and input connections, which comprises the steps of:

electrically connecting the outputs of the microprocessor control to the inputs of the microprocessor control; and

programming a test sequence into the control which further comprises the steps of:

generating a series of output signals;

conditioning each output signal to generate a resultant signal which is connected to the output of the control;

sensing the signal received at the input of the control; and

comparing the signal sensed at the input to a known, permissible input signal and generating an alarm signal if the signal sensed is not a permissible input signal.

8. The method as set forth in claim 7 and further comprising the step of:

indicating a failure in response to the alarm signal being present.

9. The method as set forth in claim 7 wherein the step of generating a series of output signals comprises:

selecting one from a table of output signals; and

indexing between the various output signals such that the step of generating includes sequentially generating each output signal.

10. The method as set forth in claim 9 wherein the step of comparing includes comparing the input received to a table of permissible input signals, said table of input signals having a permissible input signal for each output signal from the table of output signals.

-10-

16  18  26

24  20  22  14  12

32  36  30  28  40  39  35  34  44  38  42

*FIG. 1*

FIG. 2

0090757

## FIG. 3

| Label | Element |
|---|---|
| 101 | POWER UP |
| 102 | INPUTS SENSED |
| 103 | POWER UP DELAY COMPLETE? |
| 104 | FORCE DETECT |
| 105 | FORCE MODE ON? |
| 107 | OTHER FAULT? |
| 108 | JUMP TO SELECTED MODE (IDLE, HEATING, COOLING, DEFROST) MODE JUMP |
| 110 | IDLE MODE |
| 111 | READY? |
| 112 | SET HEAT/COOL |
| 113 | HEATING MODE |
| 114 | CHANGE TO COOLING? |
| 114A | DEFROST DETECT |
| 115 | COOLING MODE |
| 116 | CHANGE TO HEATING? |
| 117 | DEFROST MODE |
| 118 | SENTRY DETECT |
| 119 | THERMOSTAT TEST |
| 120 | SENTRY LAMP |
| 121 | SECONDARY HEAT |
| 122 | STRIP HEATERS |
| 123 | INDOOR FAN |
| 124 | DEFROST RESET |
| 125 | CRANKCASE HEATER |
| 126 | OFR & REV VALVE |
| 127 | SET OUTPUTS |

0090757

FIG. 4

FIG. 5